# EUROPEAN PATENT SPECIFICATION

(11) **EP 1 071 925 B1**
(45) Date of publication and mention of the grant of the patent: **10.09.2003**
(21) Application number: 99917913.8
(22) Date of filing: 29.03.1999
(51) Int. Cl.: G01C 19/20

(54) **ELECTRICALLY DRIVEN FLOATING GYROCOMPASS**
ELEKTRISCH ANGETRIEBENER SCHWIMMEND GELAGERTER KREISELKOMPASS
GYROCOMPAS FLOTTANT A FONCTIONNEMENT ELECTRIQUE

(30) Priority: 16.04.1998 DE 19816924
(43) Date of publication of application: 31.01.2001
(73) Proprietor: Northrop Grumman Sperry Marine GmbH & Co. KG, 22081 Hamburg (DE)
(72) Inventor: RAHN, Armin, D-21635 Jork (DE)
(74) Representative: Hoffmann, Jörg Peter, Dr. Ing.
(86) International application number: PCT/EP99/02164
(87) International publication number: WO 99/054682

(56) References cited:
- GB-A- 1 121 899
- US-A- 4 008 623

## Description

The invention relates to a gyrocompass having at least one electrically driven gyro which is mounted in a gas-tight capsule and is to be supplied from an external current source through the capsule wall, the capsule being mounted so as to float in an electrically conducting liquid inside a compass casing.

In order to ensure storage which is largely free from all sorts of environmental influences and exhibits low loss and low friction, it has long been known to install one or two, possibly even more mutually mechanically coupled electrically operated gyros inside a generally essentially spherical casing or capsule. It would be desirable to evacuate the capsule in order to reduce frictional losses. However, it is necessary and known for the purpose of dissipating the heat losses unavoidably produced by the gyro drive, to fill the capsule with a gas which is as light as possible and preferably inert, for example with hydrogen or helium. The capsule must therefore be absolutely gas-tight, and this must be so over very long periods of time from several years up to decades. However, appropriate cable bushings for supplying the gyro with current are indispensable. This means that extreme requirements are placed on the bushing tightness for the given conditions.

Since it is impossible to produce a more or less spherical capsule in one piece, it is known to produce the capsule holding the gyro from two essentially hemispherical shells which are denoted below as lower shell and upper shell respectively and which are plugged together in the region of their free rims in an overlapping and mutually adapted fashion to form the desired spherical capsule and are sealed hermetically with respect to one another by means of a circumferential sealing packing.

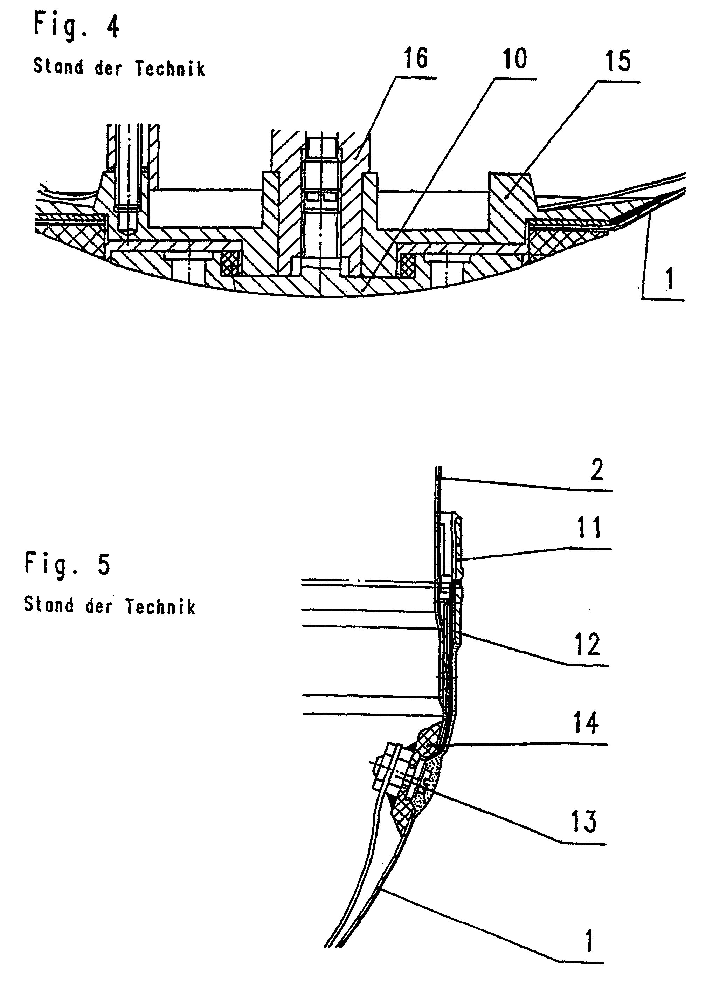

It is known to produce the two shells of the capsule from a conductive material, in particular from aluminum, which has always been preferred so far for the application envisaged here because of its low specific weight. Since the capsule is mounted so as to float in the compass casing inside a conductive liquid, that is to say in an electrolyte, it is mandatory for the purpose of avoiding a more or less rapid dissolution of the capsule casing to provide the latter on the outside with a very thick adhesive, chemically neutral coating. The smallest gaps, cracks or damage in or to this coating lead sooner or later to leaks in the capsule, in particular in the region of the electric bushings or in the region of the equatorial joint of the two capsule shells. In order to be able to ensure the tightness, in particular in the equatorial region of a joint between the lower shell 1 and the upper shell 2 (compare Figure 5), a preferably shrunk-on equatorial ring 11 made from plastic has so far additionally been provided on the outside. In order to be able to determine the instantaneous azimuthal position of the gyro, it is necessary, however, to provide on the outside of the casing a conducting region which spans at least a sub-region of the equator, the so-called azimuthal tap, which is formed in the case of gyrocompasses to date by, for example, a conducting, preferably gilded wire running around equatorially on the outside. Said azimuthal tap must, however, be connected electrically, specifically by metal with as low a resistance as possible to one pole of the power supply for the gyro. This problem has so far been solved by having the azimuthal tap wire which runs around on the outside of the equatorial ring 11 guided inward in a fashion sealed, at one point, into the lower shell 1 and connecting it by metal to a bottom contact 10 on the underside. Figure 5 shows the terminal connection 12 between the azimuthal tap and a bushing 13 which, for the reasons explained above, is to be sealed in a hermetically and absolutely gas-tight fashion to a sealing packing 14 which is also suitable, in particular, with regard to its coefficient of thermal expansion.

In the case of gyrocompasses of the type under discussion here, the current is fed to one pole of the gyro motor (of the gyro motors) via a bottom contact 10 (compare Figure 4) or from the latter to the outside via the electrically conducting liquid. The bottom contact 10 is gilded low down on the outside in order to ensure the desired, good, non-corroding contact with the surrounding conducting liquid in the low term. In order to avoid thermal stress problems, however, the body of the bottom contact 10 is preferably to be selected from a material adapted to the material of the lower shell 1, that is to say aluminium, it being the case that, as the drawing in Figure 4 reveals, to fit the lower shell 1 in turn in an absolutely gas-tight fashion into a corresponding cutout in the base presents a technically much more demanding problem with comparatively high production costs. It is, of course, necessary in this case to ensure that the outer coating of the lower shell 1 is not permitted to be interrupted or damaged at any point, since otherwise leaks are unavoidably to be feared after a short time. The bottom contact 10 is rigidly joined for its part on the inside to a flange-like support 15 into which there is inserted in the middle an upwardly projecting holder 16 as bearing support for the gyro (gyros), the structural details being of no interest in conjunction with the invention described below.

Document GB-A-1121899 discloses a gyrocompass having an electrically driven gyro which is mounted in a gas-tight capsule and is to be supplied from an external current source through the capsule wall, the capsule being mounted so as to float in a liquid inside a compass casing, the capsule comprising two mutually adapted shells which are sealed with respect to one another and consist of a high-strength material.

Further, document US-A-4008623 discloses a gyroscopic instrument comprising a hollow sphere floating in an electrically conductive liquid within the inner surface of revolution of a vessel, the gyroscopic instrument further comprising a pump for circulating the liquid through the gap between the inner surface of the vessel and the outer surface of the hollow sphere, thereby keeping the hollow sphere in concentrical condition within the inner sperical surface of the vessel.

It ought to have become clear from the initial position of the prior art described so far that the outlay for producing the capsule holding the gyros is a substantial cost factor for a gyrocompass of the type under discussion here.

It is the object of the invention to substantially simplify the structural configuration and the production of the capsule for mounting the gyro or gyros of a gyrocompass in a floating fashion.

A particular additional problem with which the inventor was faced was the requirement for the total weight of the unit, to be mounted so as to float, composed of the capsule and gyros contained therein necessarily to correspond exactly to the units known so far so that no other changes become necessary to the overall gyrocompass.

The solution according to the invention and having the substantial technical and cost-related advantages explained below consists, in the case of a gyrocompass of the type mentioned at the beginning, in that the capsule comprises two mutually adapted shells which are sealed with respect to one another and consist of a high-strength, corrosion-resistant material which is, however, a good electric conductor.

Assuming, which is not mandatory, that the capsule has an essentially spherical shape, it is advantageous when the capsule is formed by a lower essentially hemispherical shell and an upper shell, and the two shell rims are fitted into one another in a mutually overlapping fashion along an equatorial strip and joined in a gas-tight fashion by means of a circumferential sealing packing. Since the two shells consist, according to the invention, of a high-strength, corrosion-resistant material which is, however, a good electric conductor, the previous sealing external equatorial ring made from shrunk-on plastic, which is technically relatively complicated to produce can be dispensed with, because there is no longer a risk of leaks owing to corrosion. However, the technical configuration and design of the azimuthal tap explained above is thereby rendered extraordinarily simple. To be precise, it is now simply possible to use, as azimuthal tap, an equatorial strip with an uncovered surface, preferably in the overlapping rim region of the lower shell. It is thereby possible to dispense with the bushing of the azimuthal tap, as it is depicted in Figure 5, on the inside of the lower shell 1, because the metal contact is ensured directly via the material of the lower shell.

An advantage which is at least just as important from the point of view of production shows that, because of the use, as bottom contact, of the material which is a good electric conductor but resistant to corrosion, there is no longer any need for separate components. An uncovered region of the lower shell 1 on the underside is enough as the bottom contact.

The invention and further details and advantages of the same are explained in more detail below in an exemplary embodiment with reference to the drawing, in which:
Figure 1 shows a compass capsule according to the invention in a diagrammatic sectional representation;
Figure 2 shows a simplified diagrammatic external view of a compass capsule with features according to the invention;
Figure 3 shows the enlarged partial sectional representation of the equatorial joint region between an upper and a lower shell for a compass capsule according to the invention;
Figure 4 shows the partial sectional representation, corresponding to the prior art and already explained, of the base region of a lower shell of a compass casing; and
Figure 5 shows the joint and the bushing likewise already explained and corresponding to the prior art, in the region of the joint in the case of the use of a capsule assembled from two shells for protecting and holding electrically driven gyros of a gyrocompass.

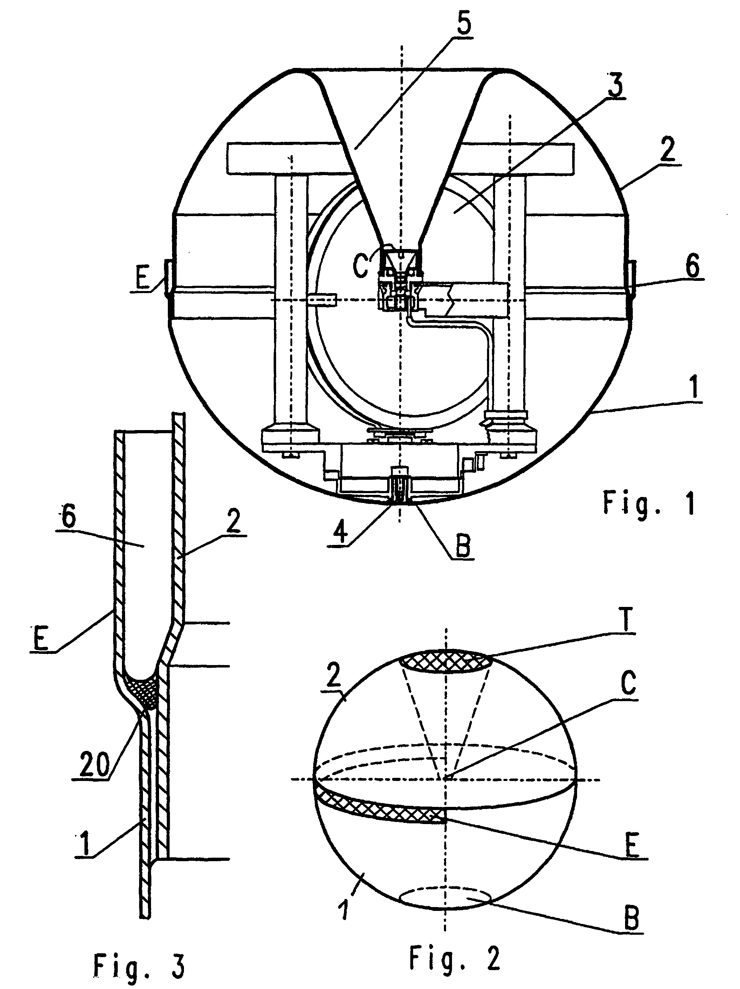

Figure 1 illustrates the capsule of novel configuration according to the invention and consisting of corrosion-resistant material which, however, is a good electric conductor, which capsule - in a similar way to the prior art - comprises a lower, essentially hemispherical shell 1 and an upper, likewise essentially hemispherical shell 2, it being the case that in the example represented the upper shell 2 is provided in the upper pole region with a funnel 5 which reaches as far as the center of the spherical capsule and has at its base, in a way known per se, a central contact C which, after being mounted ready for operation, can be covered on the top side in a sealing fashion with a very small amount of mercury or another liquid which is a good electric conductor and into which there dips from above and in a known way a contact pin which is, in particular, suspended using a universal joint. The funnel 5 and the bushing and contacting problems associated with the contact 10 are, however, not the subject matter of the invention because - as Figure 2 illustrates - the invention is also suitable for other types of gyro capsules, for example, for those which are completely spherical.

The two shells 1 and 2 forming the spherical capsule and fitted into one another in an overlapping fashion along the equatorial plane by means of appropriate offsets are produced from a corrosion-resistant material which is, however, a good electric conductor, consideration being given, in particular, to alloyed steel materials, titanium alloys and various types of conducting plastic materials, that is to say those which are enriched with carbon filling materials which are good electric conductors. In the tests carried out so far, specific alloyed steel materials have proved to be particularly advantageous.

It appears initially to be senseless to produce a member which is capable of floating overall by going over to an alloyed steel material for the capsule from the tried and tested aluminum material of low specific weight. This appears problematical simply because it is to be assumed that the total weight of the compass capsule including gyros will thereby become conspicuously higher and that there will no longer be any question of using it in previously existing compass systems. However, it has emerged that it is possible, because of some structural -changes which become possible with the use of steel, in particular, as capsule material, to make savings in weight in the interior of the capsule, with the result that full use can be made of the advantages explained below.

Since, because of the choice of material according to the invention, there is no longer a risk of problems with corrosion and thus leaks with the capsule floating in the electrolytic liquid, the shrunk-on equatorial ring made from plastic can firstly be omitted. In accordance with an advantageous embodiment of the invention, it is possible to make direct use as an azimuthal tap of an equatorially circumferential strip-like region E which is uncovered on the upper outer rim of the lower capsule 1. The special provision of a gilded wire, a conducting bushing and the like are omitted.

Even more significant are the advantages in the region of the bottom contact B. Here, direct use is likewise made as bottom contact region B of an uncovered region of the material on the shell 1, with the result that the bushing and sealing problems explained with the aid of Figure 4 and the need for a gilded bottom contact 10 are eliminated entirely.

Because of the use of the material which is substantially stronger and more stable by contrast with aluminum, it is possible, as Figure 1, shows, substantially to simplify the design on an inner, frame-like support for the mounting of the gyro or gyros 3, contact-making and mounting being performed only by means of a screw which is screwed into a threaded nipple 4 welded on the inside in the lower pole region of the lower shell 1. The joint between the strip E of the azimuthal tap and the lower bottom contact B is performed using metal and with a low resistance directly above the lower shell 1.

As may be seen from Figure 3, the upper shell 2 is fitted in an overlapping fashion to the lower shell 1 in a way known per se and hermetically sealed by means of a circumferential sealing compound 20. A circumferential trough 6 may be used in a way likewise known to insert balancing weights along the circumference.

If - as may be seen in Figure 2 - a capsule without the funnel 5 is provided, a contact T on the top side can be formed directly by the material of the upper shell 2 in the same way as the bottom contact B is formed by an uncovered region. As shown by Figure 3, the two shells 1 and 2 are electrically insulated with respect to one another. The capsule formed from the shells 1 and 2 can be provided with an insulating coating, the regions provided for the azimuthal tap E and the bottom contact or the top-side contact T remaining uncovered, that is to say being left without a protective coating. Of course, it is possible for the abovementioned external protective coating, which is no longer required from the point of view of protection against corrosion, to be left out entirely. It is to be recommended, in particular, whenever another method, for example optical tapping, is provided for the azimuthal tap.

Successful trials have already shown that, despite the use of materials of higher specific weight for the compass capsule which is able to float, because of the possible simplification of the gyro bearing design, essentially exactly the same overall weight can be achieved in the interior, as in the case of the previously known gyrocompass solutions as have been described above, with the result that modules can be exchanged directly even in the case of the many gyrocompasses already in use of the design under discussion here.

Leaving aside the substantial savings in cost in the production of the compass capsule, the invention delivers another range of technical advantages which are summarized below without any claim to completeness:
- the number of parts required is reduced substantially, for example, from approximately thirteen to four.
- The number of different materials which come into contact with the electrolytic liquid in the compass casing is reduced substantially, specifically from approximately eight to approximately three.
- The number of possible fluid leakage points on the casing is substantially reduced, because bushings are omitted.
- The material of the capsule is substantially more corrosion-resistant by comparison with the known one.
- The mechanical stablility of the capsule is improved, resulting indirectly in the possibility of observing higher production accuracies.

The higher accuracy required for ever faster ships, the so-called HSC performance, can be effectively fulfilled because of the conspicuously better stability of the capsule.

## Claims

1. A gyrocompass having at least one electrically driven gyro which is mounted in a gas-tight capsule and is to be supplied from an external current source through the capsule wall, the capsule being mounted so as to float in a liquid inside a compass casing, the capsule comprising two mutually adapted shells (1, 2) which are sealed with respect to one another and consist of a high-strength material, **characterized in that**
- the liquid shows electrical conductivity, and that
- the material of the shells of the capsule is both corrosion-resistant and a good electrical conductor.

2. The gyrocompass as claimed in claim 1, wherein the capsule is formed by a lower essentially hemispherical shell (1) and an upper shell (2), and the two shell rims are fitted into one another in a mutually overlapping fashion along an equatorial strip and joined in a gas-tight fashion by means of a circumferential sealing packing (20).

3. The gyrocompass as claimed in claim 2, wherein the upper circumferential free rim of the hemispherical lower shell (1) overlaps the upper shell (2) on the outside, and a free, electrically conducting contact strip (E) formed directly by the shell material and extending over at least a portion of the equatorial shell circumference is present on the outside in the region of the equator.

4. The gyrocompass as claimed in claim 2 or 3, wherein an external bottom contact region (B) formed directly by uncovered shell material is present in the lower pole region of the lower shell (1).

5. The gyrocompass as claimed in one of the proceeding claims 2 to 4, wherein an external upper contact region (T) formed directly by uncovered shell material is present on the upper shell (2).

6. The gyrocompass as claimed in one of the preceeding claims, wherein the two shells (1, 2) consist of a steel alloy which is corrosion-resistant even with respect to chemically aggressive media.

7. The gyrocompass as claimed in one of the preceding claims 1 to 5, wherein the two shells (1, 2) are produced from a titanium alloy.

8. The gyrocompass as claimed in one of the preceding claims 1 to 5, wherein the two shells (1, 2) are produced from a high-strength, conducting plastic material.

## Patentansprüche

1. Kreiselkompass mit mindestens einem elektrisch angetriebenen Kreisel, der in einer gasdichten Kapsel montiert ist und von einer externen Spannungsquelle durch die Kapselwand hindurch zu versorgen ist, wobei die Kapsel so montiert ist, dass sie in einer Flüssigkeit innerhalb eines Kompassgehäuses schwimmt, und wobei sie zwei aneinander angepasste Schalen (1, 2) aufweist, die gegeneinander abgedichtet sind und aus einem Material hoher Festigkeit bestehen, **dadurch gekennzeichnet, dass**
- die Flüssigkeit elektrische Leitfähigkeit zeigt und
- das Material der Schalen der Kapsel sowohl korrosionsbeständig als auch gut elektrisch leitend ist.

2. Kreiselkompass nach Anspruch 1, bei dem die Kapsel aus einer unteren im Wesentlichen halbkugelförmigen Schale (1) und einer oberen Schale (2) besteht und die zwei Schalenränder auf einander überlappende Weise entlang einem Äquatorband ineinandergesetzt sind und auf gasdichte Weise durch eine Abdichtpackung (20) in der Umfangsrichtung verbunden sind.

3. Kreiselkompass nach Anspruch 2, bei dem der obere freie Umfangsrand der halbkugelförmigen unteren Schale (1) die obere Schale (2) an der Außenseite überlappt, wobei ein freies, elektrisch leitendes Kontaktband (E), das direkt durch das Schalenmaterial gebildet ist und sich über mindestens einen Teil des äquatorialen Schalenumfangs erstreckt, an der Außenseite im Bereich des Äquators vorhanden ist.

4. Kreiselkompass nach Anspruch 2 oder 3, bei dem ein äußerer Bodenkontaktbereich (B), der direkt durch nicht bedecktes Schalenmaterial gebildet ist, im unteren Polbereich der unteren Schale (1) vorhanden ist.

5. Kreiselkompass nach einem der Ansprüche 2 bis 4, bei dem ein äußerer, oberer Kontaktbereich (T), der direkt durch nicht bedecktes Schalenmaterial gebildet ist, an der oberen Schale (2) vorhanden ist.

6. Kreiselkompass nach einem der vorstehenden Ansprüche, bei dem die zwei Schalen (1, 2) aus einer Stahllegierung bestehen, die selbst in Bezug auf chemisch aggressive Medien korrosionsbeständig ist.

7. Kreiselkompass nach einem der vorstehenden Ansprüche 1 bis 5, bei dem die zwei Schalen (1, 2) aus einer Titanlegierung hergestellt sind.

8. Kreiselkompass nach einem der vorstehenden Ansprüche 1 bis 5, bei dem die zwei Schalen (1, 2) aus einem leitenden Kunststoffmaterial hoher Festigkeit hergestellt sind.

## Revendications

1. Gyrocompas comportant au moins un gyroscope entraîné électriquement, monté dans une capsule étanche aux gaz et destiné à être alimenté par une source de courant externe à travers la paroi de la capsule, la capsule étant montée de manière à flotter dans un liquide à l'intérieur d'un boîtier de compas, la capsule comprenant deux coques adaptées l'une à l'autre (1, 2), qui sont étanches l'une par rapport à l'autre et réalisées en un matériau très résistant, **caractérisé en ce que**
- le liquide présente une conductivité électrique, et **en ce que**
- le matériau des coques de la capsule est à la fois résistant à la corrosion et bon conducteur électrique.

2. Gyrocompas selon la revendication 1, dans lequel la capsule est formée par une coque inférieure sensiblement hémisphérique (1) et une coque supérieure (2), et les bords des deux coques sont insérés l'un dans l'autre de manière à se chevaucher mutuellement le long d'une bande équatoriale et sont réunis d'une manière étanche aux gaz au moyen d'une garniture d'étanchéité circonférentielle (20).

3. Gyrocompas selon la revendication 2, dans lequel le bord libre circonférentiel supérieur de la coque inférieure hémisphérique (1) recouvre extérieurement la coque supérieure (2), et une bande de contact libre, électriquement conductrice (E) formée directement par le matériau de la coque et s'étendant sur au moins une partie de la circonférence équatoriale de la coque est présente extérieurement dans la zone de l'équateur.

4. Gyrocompas selon la revendication 2 ou 3, dans lequel une zone de contact de fond externe (B) formée directement par le matériau non recouvert de la coque est présente dans la zone de pôle inférieure de la coque inférieure (1).

5. Gyrocompas selon l'une des revendications précédentes 2 à 4, dans lequel une zone de contact supérieure externe (T) formée directement par le matériau non recouvert de la coque est présente sur la coque supérieure (2).

6. Gyrocompas selon l'une des revendications précédentes, dans lequel les deux coques (1, 2) sont réalisées en un alliage d'acier qui est résistant à la corrosion même par rapport à des milieux chimiquement agressifs.

7. Gyrocompas selon l'une des revendications précédentes 1 à 5, dans lequel les deux coques (1, 2) sont réalisées en un alliage de titane.

8. Gyrocompas selon l'une des revendications précédentes 1 à 5, dans lequel les deux coques (1, 2) sont réalisées en une matière plastique conductrice très résistante.
